# EUROPÄISCHE PATENTSCHRIFT

(11) **EP 0 531 482 B1**
(45) Veröffentlichungstag und Bekanntmachung des Hinweises auf die Patenterteilung: **13.12.1995**
(21) Anmeldenummer: 92906873.2
(22) Anmeldetag: 21.03.1992
(51) Int. Cl.: C03B 9/38

(54) **KÜHLVORRICHTUNG FÜR ZUMINDEST EINE FORM EINER IS- ODER RIS-MASCHINE ZUR HERSTELLUNG VON HOHLGLASARTIKELN**
COOLING UNIT FOR AT LEAST ONE MOULD IN AN IS OR RIS MACHINE FOR THE MANUFACTURE OF HOLLOW GLASS ARTICLES
DISPOSITIF DE REFROIDISSEMENT POUR AU MOINS UN MOULE D'UNE MACHINE IS OU RIS DE FABRICATION D'ARTICLES EN VERRE CREUX

(30) Priorität: 27.03.1991 DE 4109985
(43) Veröffentlichungstag der Anmeldung: 17.03.1993
(73) Patentinhaber: RUHRGLAS GmbH, 45329 Essen (DE)
(72) Erfinder: EMRATH, Norbert, D-4300 Essen 1 (DE)
(74) Vertreter: Spalthoff, Adolf, Dipl.-Ing.
(86) Internationale Anmeldenummer: EP9200626
(87) Internationale Veröffentlichungsnummer: WO9217411

(56) Entgegenhaltungen:
- EP-A- 0 153 801
- EP-A- 0 293 661
- EP-A- 0 400 774
- DE-A- 3 837 335

## Beschreibung

Die Erfindung bezieht sich auf eine Kühlvorrichtung für zumindest eine Form einer IS- oder RIS-Maschine zur Herstellung von Hohlglasartikeln mit einem Anschlußgehäuse, das eingangsseltig an eine Kühlluftzufuhrleitung und ausgangsseitig bei geschlossener Form an axiale Kühlkanäle der Form angeschlossen und von einem vom Boden der Form nach außen geführten Vakuumrohr durchsetzt ist.

In der DE-C2-38 37 335 ist eine solche Kühlvorrichtung gezeigt. Bei dieser bekannten Kühlvorrichtung ist das Anschlußgehäuse in zwei Kühlluftkammern zweigeteilt, von denen jede eingangsseitig über eine von einem gesteuerten Ventil öffen- und schließbare Eintrittsöffnung mit einer Kühlluftzufuhrleitung bzw. -kammer verbunden ist, die ihrerseits an die für den gesamten Teilbereich der IS- oder RIS-Maschine zuständige Stationskastenkühlung angeschlossen ist. Hierbei erfolgt die Führung der Kühlluft von der Stationskastenkühlung von der Seite her in die unterhalb des Anschlußgehäuses angeordnete Kühlluftzufuhrleitung bzw. -kammer.

Die Kühlluftbeaufschlagung des Anschlußgehäuses und damit der Formen ist im wesentlichen bestimmt von den an der Stationskastenkühlung herrschenden Verhältnissen. Demgemäß kann die Kühlung der Form nicht immer im optimalen Bereich erfolgen. Darüber hinaus ergeben sich aufgrund der Umlenkung der Kühlluft bei deren Eintritt in den unmittelbar unterhalb des Anschlußgehäuses angeordneten Bereich der Kühlluftzufuhrleitung bzw. der Kühlluftzufuhrkammer beträchtliche Verwirbelungen, die eine gleichmäßige Verteilung der zur Verfügung stehenden Kühlluft auf die Kühlkanäle der Formen erschweren.

Ausgehend von dem vorstehend geschilderten Stand der Technik liegt der Erfindung die Aufgabe zugrunde, eine Kühlvorrichtung für zumindest eine Form einer IS- oder RIS-Maschine zur Herstellung von Hohlglasartikeln zu schaffen, bei der die Verhältnisse an der Stationskastenkühlung keinen Einfluß auf die Kühlluftbeaufschlagung des Anschlußgehäuses und damit auf die eigentliche Formenkühlung der IS- oder RIS-Maschine haben.

Diese Aufgabe wird erfindungsgemäß dadurch gelöst, daß die Kühlluftzufuhrleitung des Anschlußgehäuses unmittelbar an eine Kühlluftversorgung der IS- oder RIS-Maschine angeschlossen ist. Der dem Anschlußgehäuse benachbarte Bereich vorhandener Kühlluftzufuhrleitungen kann weiter genutzt werden, indem der seitliche Anschluß des entsprechenden Bereichs mittels eines Abdeckblechs geschlossen wird. Durch die unmittelbare Verbindung des Anschlußgehäuses über die Kühlluftzufuhrleitung an die Kühlluftversorgung der Maschine ist die Kühlluftbeaufschlagung des Anschlußgehäuses völlig unabhängig von den an der Stationskastenkühlung herrschenden Verhältnissen und damit jeweils an die Formenkühlung optimal anpaßbar. Jedwede zeitliche Abhängigkeit von der Stationskastenkühlung entfällt.

Wenn die Kühlluftzufuhrleitung durch das Maschinenbett der IS- oder RIS-Maschine verläuft und an einem etwa unterhalb des Anschlußgehäuses angeordneten Anschlußteil an die Kühlluftversorgung angeschlossen ist, wobei die Kühlluftzufuhrleitung zwischen dem Anschlußgehäuse und dem Anschlußteil etwa gerade verläuft, lassen sich irgendwelche Verwirbelungen in einem dem Anschlußgehäuse benachbarten Bereich der Kühlluftzufuhrleitung nahezu völlig ausschließen; demgemäß ergibt sich eine im Vergleich zum Stand der Technik beträchtliche Vergleichmäßigung der Kühlluftbeaufschlagung der einzelnen in den Formen vorgesehenen Kühlkanäle.

Wenn im Anschlußteil ein Klappenventil angeordnet ist, mittels dem die Kühlluftzufuhr in die Kühlluftzufuhrleitung regelbar ist, lassen sich im Vergleich zu anderen Ventilbauarten erhebliche Dichtigkeitsvorteile erzielen. Diese Vorteile sind insbesondere insoweit bedeutsam, als bei der Vakuumbeaufschlagung der Formen ansonsten erhebliche Undichtigkeitsverluste auftreten könnten.

Eine weitere Verbesserung der Dichtigkeitseigenschaften ergibt sich, wenn das Klappenventil doppelexzentrisch gelagert wird.

Eine vorteilhafte Aufteilung der in das Anschlußgehäuse eintretenden Kühlluft kann erzielt werden, wenn im Anschlußgehäuse für jede Form eine Vorkammer ausgebildet ist.

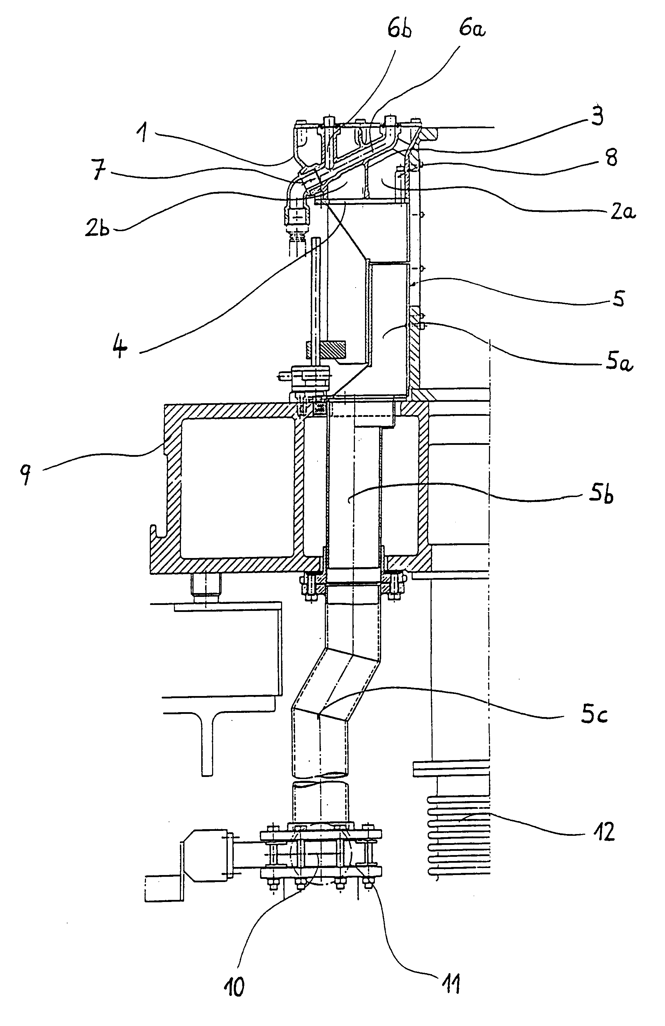

Im folgenden wird die Erfindung an Hand einer Ausführungsform unter Bezugnahme auf die Zeichnung näher erläutert, in der eine erfindungsgemäße Kühlvorrichtung dargestellt ist.

Eine in der Zeichnung dargestellte Kühlvorrichtung dient zur Versorgung von zwei nicht dargestellten Formen einer IS- oder RIS-Maschine zur Herstellung von Hohlglasartikeln mit Kühlluft.

Hierzu weist die Kühlvorrichtung ein Anschlußgehäuse 1 auf, auf dessen Oberseite in herkömmlicher Weise die nicht dargestellten Formen angeordnet sind. Innerhalb des Anschlußgehäuses 1 sind zwei einander benachbarte Vorkammern 2a, 2b ausgebildet, die durch eine Trennwand 3 voneinander getrennt und jeweils einer Form zugeordnet sind. Eingangsseitig stehen die Vorkammern 2a, 2b über eine Eintrittsöffnung 4 mit einer Kühlluftzufuhrleitung 5 und ausgangsseitig bei geschlossenen Formen mit in den Formen ausgebildeten axialen Kühlkanälen in Verbindung.

Die Vorkammern 2a, 2b sind von Vakuumrohren 6a, 6b durchsetzt, die von nicht dargestellten Böden der Formen nach außen geführt sind. In der dargestellten Ausführungsform vereinigen sich die beiden Vakuumrohre 6a, 6b zu einem gemeinsamen Rohrstück 7, das außerhalb des Anschlußgehäuses 1 an eine Vakuumquelle angeschlossen ist, die in herkömmlicher Weise steuerbar ist.

Das Anschlußgehäuse 1 ist mittels Schraubbolzen 8 od.dgl. lösbar an anderen Bauteilen der IS- bzw. RIS-Maschine befestigt.

Bei Auftreten von Verstopfern in den Kanälen der Vakuumrohre 6a, 6b kann durch Lösen der Schraubbolzen 8 das Anschlußgehäuse 1 mit den beiden Vorkammern 2a, 2b leicht und schnell abgenommen und durch ein neues Anschlußgehäuse 1 einschließlich neuer Vakuumrohre 6a, 6b ersetzt werden, so daß der Betrieb der Station in kurzer Zeit wieder aufgenommen werden kann. Zu diesem Zweck durchsetzt das gemeinsame Rohrstück 7 der Vakuumrohre 6a, 6b eine Wandung der einen Vorkammer 2b des Anschlußgehäuses 1.

Unterhalb der Eintrittsöffnung 4, die das Anschlußgehäuse 1 bzw. die in diesem ausgebildeten Vorkammern 2a, 2b mit der Kühlluftzufuhrleitung 5 verbindet, verläuft letztere in einem ersten Abschnitt 5a vom Anschlußgehäuse 1 senkrecht abwärts zum Maschinenbett 9 der IS- bzw. RIS-Maschine, in einem zweiten Abschnitt 5b senkrecht abwärts durch das Maschinenbett 9 der IS- bzw. RIS-Maschine und in einem dritten Abschnitt 5c senkrecht abwärts vom Ma-. schinenbett 9 zu einem Anschlußteil 10, mittels dem der dritte Abschnitt 5c der Kühlluftzufuhrleitung 5 unmittelbar an die Kühlluftversorgung der IS- bzw. RIS-Maschine angeschlossen ist. Das Anschlußteil 10 ist in Vertikalrichtung etwa unterhalb des Anschlußgehäuses 1 angeordnet.

Wie in der Zeichnung durch den strichpunktierten Kreis angedeutet, ist innerhalb des Anschlußteils 10 ein doppelexzentrisch gelagertes Klappenventil 11 angeordnet, mittels dem die Kühlluftzufuhr aus der Kühlluftversorgung der IS- bzw. RIS-Maschine in die zum Anschlußgehäuse 1 führende Kühlluftzufuhrleitung 5 regelbar ist.

Der Anschluß des Anschlußgehäuses 1 an die Kühlluftversorgung der Maschine erfolgt unmittelbar über die Kühlluftzufuhrleitung 5 und das Anschlußteil 10, wobei die das Anschlußgehäuse 1 versorgende Kühlluft nicht über eine Stationskastenkühlung 12 der IS- bzw. RIS-Maschine geführt ist.

## Patentansprüche

1. Kühlvorrichtung für zumindest eine Form einer IS- oder RIS-Maschine zur Herstellung von Kohlglasartikeln, mit einem Anschlußgehäuse (1), das eingangsseitig an eine Kühlluftzufuhrleitung (5) und ausgangsseitig bei geschlossener Form an axiale Kühlkanäle der Form angeschlossen und von einem vom Boden der Form nach außen geführten Vakuumrohr (6a, 6b) durchsetzt ist, dadurch gekennzeichnet, daß die Kühlluftzufuhrleitung (5) des Anschlußgehäuses (1) unmittelbar an eine Kühlluftversorgung der IS- oder RIS-Maschine angeschlossen ist.

2. Kühlvorrichtung nach Anspruch 1, bei der die Kühlluftzufuhrleitung (5) durch das Maschinenbett (9) der IS- oder RIS-Maschine verläuft.

3. Kühlvorrichtung nach Anspruch 1 oder 2, bei der die Kühlluftzufuhrleitung (5) an einem etwa unterhalb des Anschlußgehäuses (1) angeordneten Anschlußteil (10) an die Kühlluftversorgung angeschlossen ist und zwischen dem Anschlußgehäuse (1) und dem Anschlußteil (10) etwa geradlinig verläuft.

4. Kühlvorrichtung nach Anspruch 3, bei der im Anschlußteil (10) ein Klappenventil (11) angeordnet ist, mittels dem die Kühlluftzufuhr in die Kühlluftzufuhrleitung (5) regelbar ist.

5. Kühlvorrichtung nach Anspruch 4, bei der das Klappenventil (11) doppelexzentrisch gelagert ist.

6. Kühlvorrichtung nach einem der Ansprüche 1 - 5, bei der im Anschlußgehäuse (1) für jede Form eine Vorkammer (2a, 2b) ausgebildet ist.

## Claims

1. Cooling apparatus for at least one mould of an IS or RIS machine for the manufacture of hollow glass articles, having a connection housing (1) which is connected on the inlet side to a cooling air supply line (5) and on the outlet side, when the mould is closed, to axial cooling channels of the mould and through which extends a vacuum pipe (6a, 6b) which is guided outwards from the base of the mould, characterised in that the cooling air supply line (5) of the connection housing (1) is connected directly to a cooling air supply of the IS or RIS machine.

2. Cooling apparatus according to Claim 1, wherein the cooling air supply line (5) extends through the machine bed (9) of the IS or RIS machine.

3. Cooling apparatus according to Claim 1 or 2, wherein the cooling air supply line (5) is connected, at a connection part (10) arranged approximately below the connection housing (1), to the cooling air supply and extends approximately in a straight line between the connection housing (1) and the connection part (10).

4. Cooling apparatus according to Claim 3, wherein the connection part (10) houses a flap valve (11) by means of which the cooling air supply to the cooling air supply line (5) can be regulated.

5. Cooling apparatus according to Claim 4, wherein the flap valve (11) is mounted in double-eccentric manner.

6. Cooling apparatus according to any one of Claims 1 to 5, wherein a prechamber (2a, 2b) is formed in the connection housing (1) for each mould.

## Revendications

1. Dispositif de refroidissement pour au moins un moule d'une machine IS ou RIS destinée à la fabrication d'articles creux en verte, comportant un boîtier de raccordement (1) qui est connecté, côté entrée, à une conduite (5) d'arrivée d'air de refroidissement et, côté sortie, lorsque le moule est fermé, à des canaux axiaux de refroidissement du moule et qui est traversé par un tube (6a, 6b) à vide menant du fond vers l'extérieur, caractérisé par le fait que la conduite (5) d'arrivée d'air de refroidissement du boîtier de raccordement (1) est directement connectée à une alimentation en air de refroidissement de la machine IS ou RIS.

2. Dispositif de refroidissement selon la revendication 1, dans lequel la conduite (5) d'arrivée d'air de refroidissement s'étend à travers le bâti (9) de la machine IS ou RIS.

3. Dispositif de refroidissement selon la revendication 1 ou la revendication 2, dans lequel la conduite (5) d'arrivée d'air de refroidissement est connectée à l'alimentation en air de refroidissement à un élément de raccordement (10) situé légèrement en-dessous du boîtier (1) de raccordement et s'étend de manière sensiblement rectiligne entre ledit boîtier (1) de raccordement et l'élément de raccordement (10).

4. Dispositif de refroidissement selon la revendication 3, dans lequel une soupape à clapet (11) est disposée dans l'élément de raccordement (10), soupape à l'aide de laquelle on peut régler l'entrée d'air de refroidissement dans la conduite (5) d'arrivée d'air de refroidissement.

5. Dispositif de refroidissement selon la revendication 4, dans lequel la soupape à clapet (11) est montée sur un double excentrique.

6. Dispositif de refroidissement selon l'une des revendications 1 à 5, dans lequel une préchambre (2a, 2b) est aménagée pou chaque moule dans le boîtier de raccordement (1).
